(19) Europäisches Patentamt
European Patent Office
Office européen des brevets

(11) **EP 3 185 503 A1**

(12) **EUROPEAN PATENT APPLICATION**

(43) Date of publication:
**28.06.2017 Bulletin 2017/26**

(51) Int Cl.:
*H04L 29/06* [(2006.01)]    *H04L 12/715* [(2013.01)]

(21) Application number: **15307133.7**

(22) Date of filing: **23.12.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Alcatel Lucent**
**92100 Boulogne-Billancourt (FR)**

(72) Inventors:
• **BETGE-BREZETZ, Stéphane**
**91620 NOZAY (FR)**
• **KAMGA, Guy-Bertrand**
**91620 NOZAY (FR)**

(74) Representative: **Berthier, Karine et al**
**Alcatel-Lucent International**
**148/152, route de la Reine**
**92100 Boulogne-Billancourt (FR)**

(54) **METHOD AND SERVER FOR COMPUTING AND ENFORCING A TRUSTED PATH IN A MULTI DOMAIN NETWORK**

(57)    A method for computing and enforcing a trusted path between a first machine (VM1) in a source domain (DO1) and a second machine (VM2) in a destination domain (DO4) in a multi domain network, mainly comprises the steps of:
- a) in the source domain (DO1) sending a trusted path computation request to each of the trusted neighboring domains (DO2, DO3);
- b) in each trusted downwards neighboring domain (DO2), determining whether this latter is the destination domain or not, and
-- if it is not the destination domain, seeking every next trusted downwards neighboring domain (DO3, DO4) and,
--- seeking at least one trusted path segment that can reach a found next trusted downwards neighboring domain (DO4), and then forwarding the trusted path computation request to the found next trusted downwards neighboring domain (DO4);
--- re-iterate all the step b ;
-- if it is the destination domain (DO4), seeking within this destination domain every trusted path segment that can reach the second machine (VM2), and, if there is at least one such segment, sending a positive response message;
- c) when all the trusted downwards neighboring domains (DO2, DO3) have been processed, re-iterate step b for each next trusted downwards neighboring domain (DO4).

**Fig. 3**

EP 3 185 503 A1

**Description**

BACKGROUND OF THE INVENTION

Field of the invention

The present invention generally relates to the end-to-end computation and enforcement of a trusted path in a software defined network based multi-domain network.

Software defined networking (**SDN**) is an approach to computer networking that allows network administrators to manage network services through abstraction of lower level functionality. This is done by decoupling the system that makes decisions about where traffic is sent (the control plane) from the underlying systems that forward traffic to the selected destination (the data plane).

Cloud computing is the delivery of computing as a service rather than a product, whereby shared resources, software, and information are provided to computers and other devices as a utility (like the electricity grid) over a network (typically the Internet). Clouds can be public, private or hybrid.

The present invention generally relates to the security of sensitive data in a cloud supported by a SDN in a plurality of domains. Security is a critical issue in such dynamic environment where data can easily be transferred between different servers and locations. A particular issue concerns the characteristics (e.g., location, security level) of the storage area for sensitive data, as this storage area must be compliant with enterprise or state regulation constraints applicable on this data. But, beyond controlling the storage area, there is also a specific need to control the path followed by the data when they move in the cloud. The selection of a path for transferring sensitive data must be made according to security and sovereignty policies. Preferably, one must then certify that these sensitive data are actually transferred via the selected path.

Known solutions for communication protection, e.g.:

- TLS (Transport Layer Security, a cryptographic protocol for secure Internet communication),
- SSL (Secure Sockets Layer): a protocol for encrypting information over the Internet),
- VPN (virtual Private Network).

All these known methods may not be considered as sufficient as they do not prevent inferring and then obtaining information from the traffic observed between the two extremities (e.g. two virtual machines). For instance, the monitoring of the shape of the traffic (even encrypted) between two cloud entities (for instance belonging to two companies) can be used to infer the level of exchanges between these entities. Moreover, some denial of service attacks can also be performed on un-trusted or insufficiently secure nodes located on the path of the sensitive traffic (and then disturbing or blocking this sensitive traffic). We can also note that some regulations may also impose direct constraints on the data transport (e.g., data sovereignty initiatives such as the European "Schengen of data").

Finally, this requirement on trusted path for sensitive data may also be critical in the context of network function virtualization (**NFV**). Indeed, in a network function virtualization environment, different virtual network functions (**VNF**) may exchange sensitive data over the network function virtualization infrastructure.

Such sensitive data can be internal telecommunication operator data, for instance sensitive data held in:

- A HSS (Home Subscriber Server),
- an Internet Protocol Multimedia subsystem (IMS) platform,
- a presence server,
- a Business application running upon the NFV infrastructure,
- etc.

Sensitive data can as well be customers' data (for instance sensitive data of an enterprise that is using the telecommunication operator IMS Rich Communication Suite functions).

The dynamicity of the network function virtualization Infrastructure (for instance with the migrations of the virtual machines (**VM**) handling network NFV further increases this need of guaranteeing a trusted path between the network function virtualizations in the Cloud network infrastructure.

It then may be requested that sensitive data should cross the cloud network only in accordance to specific security or regulatory policies. For instance, a policy should state that the path followed by a sensitive data must not cross an un-trusted node (e.g., software switch), network zone, provider, etc. Also, other policies may state that the path must not cross a given area or country. In order to tackle this problem of trusted path for sensitive data transferred in a cloud network, the emerging SDN technology appears very relevant as it makes networks being more programmable.

Description of the prior art

Though possible benefits of SDN technology regarding the control of sensitive traffic in the cloud have already been underlined, it has not really been carried out a solution for computing such a trusted path in a SDN multi-domain network, and satisfying some specific security and regulatory constraints. Some works have been performed considering different SDN controllers communicating with each other in a multi-domain environment, but they are targeting resilience or scalability constraints which are different from the security and sovereignty ones.

Other works aimed to establish a network path in a multi-domain network that satisfies some constraints related to quality of service or reliability. These works leverage classical path computation approaches such as Resource Reservation protocol (RSVP), Multiprotocol Label Switching Traffic Engineering (MPLS-TE), or Internet Engineering Task Force (IETF) Path Computation Element (PCE). However, although mentioned in the perspectives of some of these works (e.g., with the notion of "Explicit Route Exclusions" in the PCE), these approaches are not targeting the establishment of a trusted path satisfying specific security and sovereignty constraints, and allowing to ensure the customer trust. They are also not designed to support a fine grain configuration (a trusted path can even be defined per sensitive data) in a dynamic environment (with VM migrations between physical servers) as it may occur in an NFV environment.

Thus there is a need to provide a technical solution to tackle this problem of the end-to-end computation and enforcement of a trusted path in a SDN-based multi-domain network.

This can be solved by applying, the method and the server according to the invention.

SUMMARY OF THE INVENTION

A first object of the invention is a method for computing and enforcing a trusted path between a first machine in a source domain and a second machine in a destination domain, in a multi domain network, comprising the steps of:

- a) in the source domain sending a trusted path computation request to each of the trusted neighboring domains, this trusted path computation request comprising a policy defining what is a trusted domain and a trusted node;
- b) in each trusted downwards neighboring domain, determining whether this latter is the destination domain or not, and

    -- if it is not the destination domain, seeking every next trusted downwards neighboring domain and,

        --- if at least one next trusted downwards neighboring domain is found, seeking at least one trusted path segment that can reach a found next trusted downwards neighboring domain, and, if a trusted path segment is found then forwarding the trusted path computation request to the found next trusted downwards neighboring domain;
        -- re-iterate all the step b for another found trusted downwards neighboring domain until all the found next trusted downwards neighboring domain has been processed;

    -- if it is the destination domain, seeking within this destination domain every trusted path segment that can reach the second machine, and, if there is at least one such segment, concluding that a trusted path exists between the first and the second machine;

- c) when all the trusted downwards neighboring domains have been processed, re-iterate step b for each next trusted downwards neighboring domain until the destination domain has been reached.

Thanks to the steps made in each successive downwards domain, a trusted path computing is distributed from the source domain to the destination domain, and implements the given policy in each successive domain.

According to a preferred embodiment of the method it further comprises the steps of sending a positive response from the destination domain to the source domain if it has been concluded that a trusted path has been found between the first machine and the second machine, for each found trusted path that can reach the second machine.

A second object of the invention is a server for implementing the method according to the invention.

Other features and advantages of the present invention will become more apparent from the following detailed description of embodiments of the present invention, when taken in conjunction with the accompanying drawings.

BRIEF DESCRIPTION OF THE DRAWINGS

In order to illustrate in detail features and advantages of embodiments of the present invention, the following description will be with reference to the accompanying drawings. If possible, like or similar reference numerals designate the same or similar components throughout the figures thereof and description, in which:

- Figure 1 schematically represents a first example of a multi-domain network for illustrating the principle of the method according to the invention.
- Figure 2 schematically represents a simpler example of a multi-domain network for illustrating the messages exchanged during the essential steps of the method according to the invention.
- Figures 3 and 4 schematically represent a third example of a multi-domain network and illustrate, with more details, the distributed computing of a trusted path in an intermediate domain of this network.

DETAILED DESCRIPTION OF THE PREFERRED EMBODIMENTS

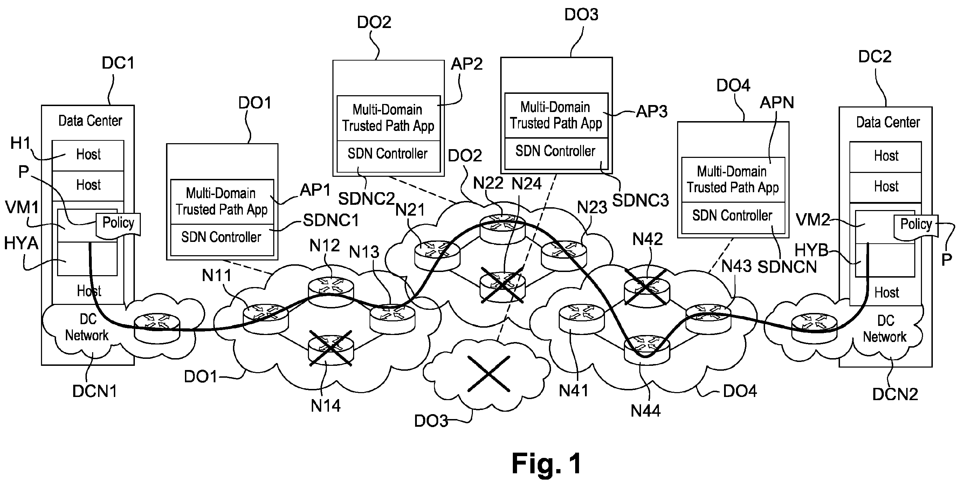

**Figure 1** schematically represents a first example of a SDN multi-domain network for illustrating the principle of the method according to the invention. A trusted path is wanted between a virtual machine VM1 in a data center DC1 and a virtual machine VM2 in a data center DC2. All the domains and nodes traversed by this path must be compliant with a given policy P assigned to these virtual machines VM1, VM2.

The multi-domain network comprises four domains DO1, DO2, DO3, DO4. The domain DO1 comprises nodes N11, N12, N13, N14, wherein N14 is untrusted.

The domain DO2 comprises nodes N21, N22, N23, N24, wherein N24 is untrusted.

The domain DO3 comprises a plurality of nodes that are not represented on this figure and that are all untrusted.

The domain DO4 comprises nodes N41, N42, N43, N44, wherein N42 is untrusted.

The node N13 of the domain DO1 is physically linked to the node N21 of the domain DO2. The node N23 of the domain DO2 is physically linked to the node N41 of the domain DO4.

The data center DC1 comprises a local area network DCN1 and host processors H1. A virtual machine VM 1 is run on a hypervisor HYA running on one of these host processors H1. The local area network DCN1 is physically linked to the node N11 of the domain DO1.

The data center DC2 comprises a local area network DCN2 and host processors H2. A virtual machine VM 2 is run on a hypervisor HYB running on one of these host processors H2. The local area network DCN2 is physically linked to the node N43 of the domain DO4.

Each of the domains DO1, DO2, DO3, DO4 comprises a SDN controller, respectively SDNC1, SDNC2, SDNC3, SDNC4. The method according to the invention is implemented by means of a multi-domain trusted path application (**MDTPA**). Instances AP1, AP2, AP3, and AP4, of this MDTPA are respectively run in the SDN controllers SDNC1, SDNC2, SDNC3, SDNC4. The respective instances executed in two neighboring domains can exchange two types of messages: trusted path computation requests PCReq and trusted path computation responses PCRep.

A trusted path computation request PCReq comprises the following information:

- The source IP address of the trusted path to be computed;
- The destination IP address of the trusted path to be computed;
- A security/sovereignty policy that comprises different constraints such as:

  -- Types of network nodes to be avoided, e.g. the nodes of a given un-trusted equipment vendor, the nodes of a given type (e. g. switches that have an old operating system version or an operating system not yet appropriately patched), or all the virtual/software switches (that may be considered as less protected than the hardware switches).

  -- Domains or domain types to be avoided, e.g. some domains designated by their identifiers, or some given countries, or some given network areas.

  -- Vulnerability level maximum: The policy can be constituted by a more aggregated indicator that defines the maximum level of vulnerability of a domain, or of a node, in order to be part of the trusted path.

  -- Reputation level minimum: The policy can also be constituted by another aggregated indicator that defines the minimum level of reputation of a domain, or of a node, that must be satisfied to be part of a trusted path.

Note that the security/sovereignty policy can also be defined at an abstract level: e.g. mandatory support of European Community regulation (countries not adequate being defined by this regulation), support future "Safe Harbor 2.0" (as the Safe Harbor is being reconsidered). It will then be up to each network domain to translate this abstract level policy in concrete (network-related) constraints as previously described.

In the example of **Figure 1,** the policy mentions:

- A white list of domains DO1, DO2, DO4 that are trusted. Any other domain, in particular DO3, is untrusted by default.
- A black list of nodes that are untrusted. In this example, the nodes N14, N24, N42 are untrusted (even if they belong to trusted domains) because they are located in black listed countries (Every other country is considered as trusted by default).
- There may be constraints that are only preferences. In this case, each positive response sent back to the source domain contains information about the preferences that are satisfied, in addition to the costs of the trusted path segments. The costs and this information are then used as criteria for selecting the best trusted path, if there is a plurality of available trusted paths.

The virtual machine VM1 sends a trusted path computation request to the node 11 of the source domain D1, via the exit node N13 and the entry node N21. This trusted path computation request comprises a policy defining what are a trusted domain and a trusted node. It is not allowed, by the policy, to send a request via the domain DO3 because it is untrusted.

**In the source domain DO1,** the instance PA1 forwards the trusted path computation request (including the policy) to each one of the trusted neighboring domains. In this example, there is a single trusted neighboring domain: DO2, because DO3 is untrusted. The topology of the domain DO1 is such that there are two physical paths to the domain DO2, N11-N12-N13 and N11-N14-N13, however the latter is untrusted because of the node N14 is untrusted. The instance PA1 concludes that the only trusted path segment in the domain DO1 is N11-N12-N13.

So it forwards the trusted path computation request to the domain DO2, the exit node N13.

Note that, in other embodiments, the requests and responses may be transmitted via a separate management network, instead of the data network.

**In the neighboring domain DO2,** the local instance PA2 receives the request and determines whether the domain DO2 is the destination domain or not, by examining the address of the virtual machine VM2. As DO2 is not the destination domain, the instance PA2 seeks every next trusted downwards neighboring domain and only finds the domain DO4. Then the instance PA2 seeks at least one trusted path segment that can traverse the domain DO2 and can reach the next trusted downwards neighboring domain DO4. The topology of the domain DO2 is such that the instance PA2 finds two physical path segments: N21-N22-N23 and N21-N24-N23. There is a single trusted path segment, N21-N22-N23, because the node N24 is untrusted.Then it forwards the trusted path computation request to the all the trusted downwards neighboring domain, i. e. DO4 in this example.

The domain DO3 is untrusted. So it does not receive any trusted path computation request and sends no conclusion to any other domain.

**In the next neighboring domain DO4,** the local instance PA4 detects that domain DO4 is the destination domain for the requested trusted path, by examining the address of the virtual machine VM2. So it does not seek any **next** trusted downwards neighboring domain. It seeks every trusted path segment that can reach the virtual machine VM2, and, if there is at least one such segment, it sends a positive response message to the source domain DO1 for indicating the existence of a trusted path between the first and the second machine VM1, VM2. This trusted path is: N11-N12-N13-N21-N22-N23-N41-N42-N43.

**In the source domain DO1,** the local instance PA1 collects the positive responses. Each positive response indicates a trusted path.

If there are several found trusted path, it selects the best one, and then sends a configuration request message to all the nodes constituting the selected trusted path.

Note that the method would further consist in sending a negative response from a first domain, for instance DO2 or DO4, up to the source domain DO1 that sent a request, if the instance executed in this domain concludes that there is no trusted path segment that can reach a next trusted downwards neighboring domain or the second machine, within the first domain. This negative response informs the source domain that the request definitely cannot be satisfied.

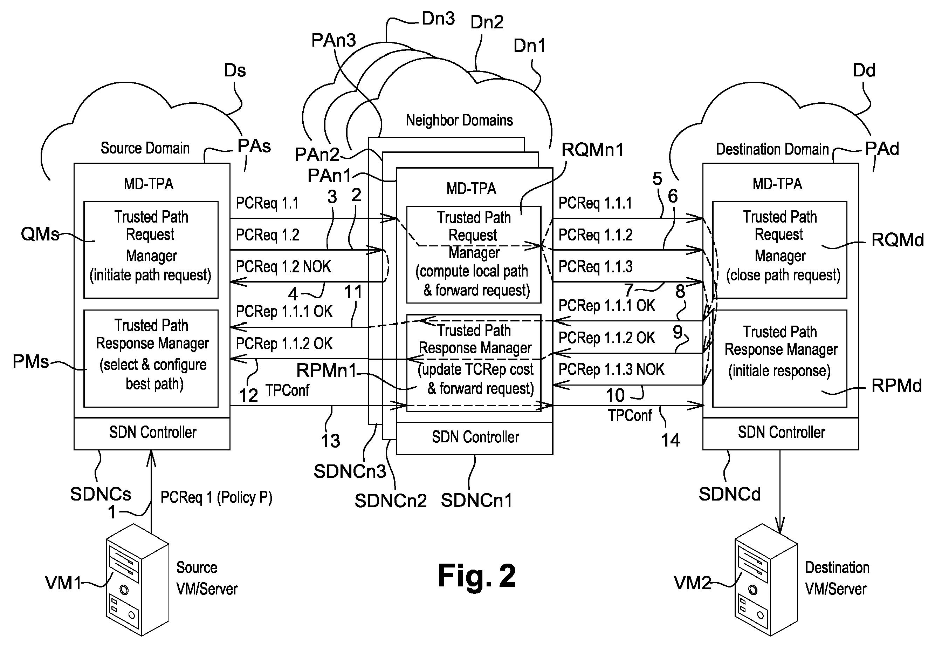

**Figure 2** represents a simpler example of a multi-domain SDN network for illustrating the messages exchanged during the essential steps of the method according to the invention.

In what follows, we will "call entry" node a node that is used by request to get into a domain. We will call "exit node" a node that is used by a request to get out of a domain. This terminology is related to a give request. A same node can act as an entry node for one request and as an exit node for another one.

A trusted path is wanted between a virtual machine VM1 in a source domain Ds and a virtual machine VM2 in a destination domain Dd, via an intermediate domain that must be selected among three domains Dn1, Dn2, Dn3 that are neighboring the domains DS and Dd. Of course, there may be several possible trusted paths via a same intermediate domain, or via different intermediate domains.

In this example, the domains Ds, Dn1, Dn2, Dd are trusted; and the domain Dn3 is untrusted according to a given policy P.

The topologies of the domains are the followings:

- **In the source domain Ds,** there are two trusted entry nodes. The virtual machine VM1 is physically linked to a first trusted entry node. There are two trusted exit nodes (Nodes are not represented on Figure 2) that are linked to first trusted entry node by two trusted path segments inside the source domain Ds. A first trusted exit node is linked to a first trusted entry node of the domain Dn1, and the second one is linked to an untrusted entry node of the domain Dn2.

- **Inside the intermediate domain Dn1,** three trusted exit nodes are physically linked to the first trusted entry node of Dn1 by three trusted links. The three trusted exit nodes are respectively linked to three trusted entry nodes of the destination domain Dd. A fourth trusted entry node is linked to a fourth trusted exit node by a trusted path inside the domain Dn1.

- **In the intermediate domain Dn2,** there are physical path segments between the above mentioned entry node and exit nodes, but this entry node is untrusted.

- **In the intermediate domain Dn3,** there are several path segments physically available, but the domain Dn3 is untrusted; thus no path segment is trusted in the domain Dn3.

- **In the destination domain Dd,** there are two trusted entry nodes, one untrusted entry node, and one trusted exit node that is linked to the virtual machine VM2. So there are two trusted path segments respectively between the two trusted entry nodes and the virtual machine VM2. A third path segment physically exists to the untrusted entry node but it is untrusted because this entry node is untrusted.

Each domain Ds, Dn1, Dn2, Dn3, Dd comprises a single SDN controller, respectively: SDNCs, SDNCn1, SDNCn2, SDNCn3, SDNCd. The method according to the invention is implemented by means of an application called multi-domain trusted path application (**MDTPA**). Instances PAs, PAn1, PAn2, PAn3, PAd of the MDTPA are respectively executed in the SDN controllers SDNCs, SDNCn1, SDNCn2, SDNCn3, SDNCd, in this example. The MD-TPA computes and enforces an end-to-end path satisfying the given security/sovereignty policy P.

Each instance of the MDTPA comprises two main modules:

- A trusted path request manager, respectively RQMs, RQMn1, RQMn2, RQMn3, RQMd (RQMn2 and RQMn3 are not visible on the Figure 2), for sending a trusted path request to each downwards neighboring domain.
- A trusted path response manager, respectively RPMs, RPMn1, RPMn2, RPMn3, RPMd (RPMn2 and RPMn3 are not visible on the Figure 2) for receiving and processing responses sent by downwards neighboring nodes.

For instance, when a trusted path is needed between the first virtual machine VM1 executed on a server in the source domain Ds and a second virtual machine VM2 executed on another server in the destination server Dd, an embodiment of the method comprises the following steps:

- **Step 1:** A trusted path computation request PCReq 1 is sent from the virtual machine VM1 to the trusted path request manager RQMs in the source domain Ds. This trusted path computation request comprises the source and destination IP addresses of the ends of the requested path, and a security/sovereignty policy P. The path computation request PCReq 1 will be forwarded by the trust path request manager RQMs to every trusted node of every trusted downwards neighboring domains, ia trusted exit nodes of the domain Ds. As the domain Dn3 is untrusted no trusted path computation request will be sent to it. Thus no trusted path will cross the domain Dn3..
- **Step 2:** Via a first trusted exit node of the domain Ds and via a first entry node of the domain Dn1, the trust path request manager RQMs forwards the path computation request PCReq 1 to the single entry node of the neighboring domain Dn1, without knowing whether it is a trusted entry node or not.

- **Step 3:** Via a second trusted exit node of the domain Ds and via the entry node of the domain Dn2, the trust path request manager RQMs forwards the path computation request PCReq as a trusted path computation request PCReq 1.2, without knowing whether it is a trusted entry node or not. The trust path request manager RQMn2 of the instance PA2 receives the request PCReq1.2, but it knows that this entry node is untrusted, though the domain Dn2 is trusted. So it will not forward it downwards.

- **Step 4:** The trust path request manager RQMn2 of the instance PAs sends a negative response PCRep1.2 NOK, in response to the path computation request PCReq1.2, to the trusted path response manager RPMs. Thus no trusted path will cross the domain Dn2 via this untrusted node. There is no trusted path segment for traversing the intermediate domain Dn2.
- **Step 5:** Via the first trusted exit node of the domain Dn1 and the first entry node of the domain Dd, the trust path request manager RQMn1 forwards the request PCReq1.1, as a trusted path computation request PCReq 1.1.1, to the trusted path request manager RQMd of the downwards neighboring domain Dd, because the trust path request manager RQMn1 knows that this domain Dd is trusted (But it does not know whether the first entry node is trusted or not).
- **Step 6:** Via the second trusted exit node of the domain Dn1, and the second entry node of the domain Dd, the trust path request manager RQMn1 forwards the request PCReq1.1, as a trusted path computation request PCReq 1.1.2, to the trusted path request manager RQMd of the downwards neighboring domain Dd, because the trust path request manager RQMn1 knows that this domain Dd is trusted (But it does not know whether the second entry node is trusted or not).
- **Step 7:** Via the third trusted exit node of the domain Dn1, and the third entry node of the domain Dd, the trust path request manager RQMn1 forwards the request PCReq1.1, as a trusted path computation request PCReq 1.1.3, to the trusted path request manager RQMd of the downwards neighboring domain Dd, because the trust path request manager RQMn1 knows that this domain Dd is trusted (But it does not know whether the entry node is trusted or not).
- **Step 8:** Via a first trusted exit node of the destination domain Dd and via a trusted entry node of the domain Dn1, the trusted path response manager RPMd sends a positive response PCRep1.1.1 OK to the trusted path response manager RPMs of the source domain Ds, in response to the path computation request PCReq1.1.1. (There is always an available second trusted entry node because a trusted entry node is also a trusted exit node).
- **Step 9:** Via a second trusted exit node of the destination domain Dd and via a third trusted entry node of the domain Dn1, the trusted path response manager RPMd sends a positive response PCRep1.1.2 OK to the trusted path response manager RPMs of the source domain Ds, in response to the path computation request PCReq1.1.2. (There is a third trusted entry node because a trusted entry node is also a trusted exit node).
- **Step 10:** Via a third trusted exit node of the destination domain Dd and via a fourth entry node of the domain Dn1, the trusted path response manager RPMd sends a negative response PCRep1.1.3 NOK, in response to the path computation request PCReq1.1.3. (There is a fourth trusted entry node because a trusted entry node is also a trusted exit node).This negative response is not forwarded further upward. It is useful for the instance Pan1 but not for the instance PAs.

- **Step 11:** The positive response PCRep1.1.1 OK is forwarded from the trusted path response manager RPMn1 to the trusted path response manager RPMs in the source domain Ds.
- **Step 12:** The positive response PCRep1.1.2 OK is forwarded from the trusted path response manager RPMn1 of the instance PAn1 to the trusted path response manager RPMs of the instance PAs in the source domain Ds.
- **Step 13:** Since it has received two positive responses, the trusted path response manager RPMs of the instance PAs in the source domain Ds must select one of the two possible trusted paths. Then it sends a trusted path configuration message TPConf to the nodes constituting the selected trusted path segment crossing the domain Dn1. Each time an instance of the MD-TPA receives this configuration request, it applies, within its domain, the appropriate node configurations.
- **Step 14:** The instance Pan1, in the domain Dn1, forwards the trusted path configuration message TPConf to the nodes constituting a trusted segment of the selected trusted path in the destination domain Dd.

Note: In this embodiment, each request and response is transmitted via the nodes of the data network, but this not mandatory. In another embodiment, each request and response can be transmitted via a separate management network instead of the nodes of the data network. For instance, they can be transmitted via an application programming interface web service of each traversed domain (application programming interface offered for instance by the controller or manager of the domain). The computation of the trusted path cost is the same in both embodiments. It takes into account the number of traversed domains, the number of traversed nodes in each domain, etc. In both embodiments the computed trusted path cost is the same.

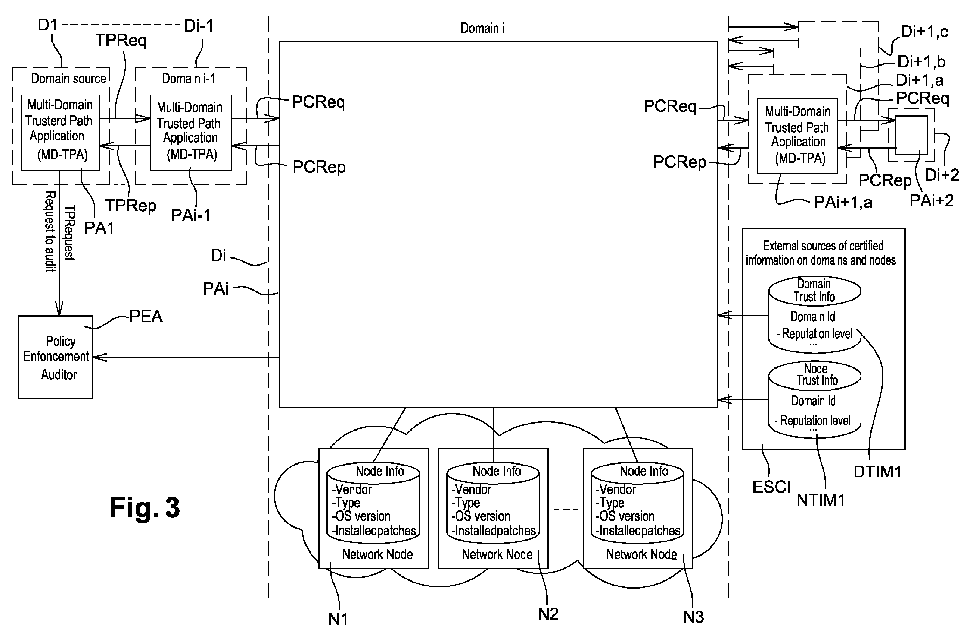

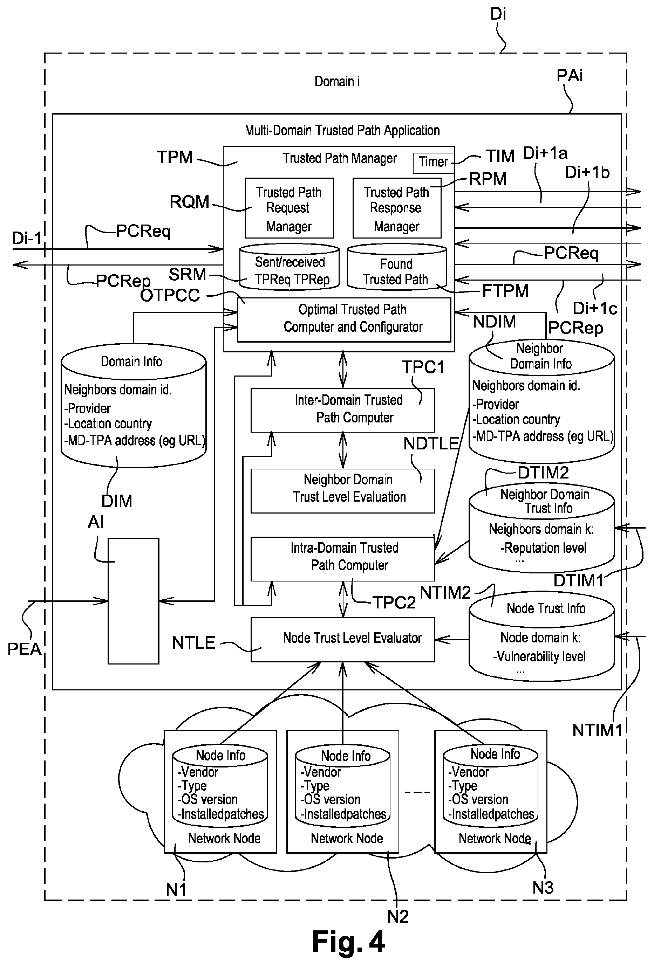

**Figures 3 and 4** schematically represent a third example of multi-domain network and illustrate, with more details, the distributed computing of a trusted path in an intermediate domain of this network. In particular they represent an embodiment PAi of the multi-domain trusted path application (**MD-TPA**) implementing the method according to the invention. This instance PAi is executed in an intermediate domain Di, i. e. this domain is neither the source domain nor the destination domain.

On **Figure 3,** the method according to the invention is used for computing a trusted path from a first machine linked to a node in a source domain D1 to a second machine linked to a node in a destination domain Di+2, with a series of intermediate domains, in particular the domain Di that we will consider more in details. The domain Di has a single upwards neighboring domain Di-1, and three downwards neighboring domains Di+1, a; Di+1, b; Di+1, c. Instances PA1;...; PAi-1; PAi; PAi+1, a; PAi+1, b; PAi+1, c; PAi+2; of the MD-TPA are respectively running in the domains:

D1; ...; Di-1; Di; Di+1, a; Di+1, b; Di+1, c; Di+2.

They will compute and enforce a final segment of the wanted trusted path satisfying a given security/sovereignty policy stored in a policy enforcement auditor PEA.

Let us consider the software means that are used by the instance PAi of the MD-TPA for computing, in the domain Di, a segment of the wanted trusted path, this segment spanning from the entry of the considered domain Di to an entry of the domain Di+1, a; or Di+1, b; or Di+1, c; if any segment can be computed.

Each of the instances PA1;...; PAi-1; PAi; PAi+1, a; PAi+1, b; PAi+1, c; PAi+2; is linked to the policy enforcement auditor PEA and to external sources ESCI of certified information about domains and nodes:

- A memory DTIM1 storing domain trust information, for instance reputation levels, etc, associated to domain identifiers;
- and a memory NTIM1 storing node trust information, for instance vulnerability levels, etc, associated to node types.

Each of these instances is also linked to memories storing information about the nodes belonging to the considered domain. For instance, the instance PAi of the domain Di is linked to the nodes N1, N2, N3 belonging to the domain Di, for reading memories respectively storing node information: vendor, type, version of operating system, installed patches, etc.

When a trusted path is requested at the source domain D1 a trusted path request PCReq is forwarded from the instance PA1 in the source domain D1 up to the instance PAi via every available trusted path, if any. This trusted path request PCReq contains the source and destination IP addresses of the ends of the trusted path to be computed, and the required security/sovereignty policy (e.g. to avoid some given un-trusted nodes, untrusted network areas, or un-trusted countries).

In this example, the trusted path request PCReq is successfully forwarded up to the instance PAi of the domain Di. The instance PAi determines whether the domain Di is the destination domain or not. As the domain Di is not the destination domain, the instance PAi seeks every next trusted downwards neighboring domain. In this example, it finds three trusted downwards neighboring domains:

## Di+1, a; Di+1, b; Di+1, c

For each found trusted downwards neighboring domains the instance PAi seeks all the trusted path segments that can reach each found next trusted downwards neighboring domain.

For instance, if the instance PAi finds a trusted path segment that can reach the found next trusted downwards neighboring domain Di+1, a then the instance PAi forwards the trusted path computation request to the found next trusted downwards neighboring domain Di+1, a .

For instance, the instance PAi finds a trusted path segment that can reach the found next trusted downwards neighboring domain Di+1, b then the instance PAi forwards the trusted path computation request to the found next trusted downwards neighboring domain Di+1, b .

For instance, the instance PAi finds no trusted path segment that can reach the found next trusted downwards neighboring domain Di+1, c then the instance PAi cannot forwards the trusted path computation request to the found next trusted downwards neighboring domain Di+1, c .

As the instance PAi of the domain Di has found two trusted path that can respectively reach the next downwards neighboring domains Di+1, a and b, it forwards the request to the instances PAi+1, a and PAi+1, b of these domains Di+1, a and Di+1, b.

Note that if the domain Di was the destination domain, the instance PAi would seek every trusted path segment, within this destination domain, that would be able to reach the second machine linked to the destination domain, and, if there was at least one such segment, it would send a positive response message. This latter would be iteratively sent (through the different domains previously crossed by the corresponding PCReq) to the source domain D1 for indicating the existence of a trusted path between the first and the second machine.

At each step of this trusted path request propagation, the local instance PAi of the MD-TPA is checking:

(i) whether the downward neighboring domains are compliant with the policy;
(ii) and, if a given downward neighboring domain is compliant, whether there is a path segment compliant with the policy and that can reach a next neighboring domain.

Finally, if there is actually at least one trusted path possible up to the instance PAi+2 in the destination domain Di+2, this instance PAi+2 will send back a positive response PCRep that will be iteratively forwarded up to the source domain D1. Then the instance PA1 in the source domain D1 will select the best trusted path (if several trusted paths are found), and finally it will send a message TPConf that will trigger the configuration in all the domains traversed by the selected trusted path. Each domain configures the nodes supporting the selected trusted path, within this domain.

However, such a trusted path enforcer is in fact not sufficient because it only configures, in the network, a trusted path compliant with a given security policy. Indeed, it is also needed to:

1. Provide some certificates (or strong/tamper-proof evidences) of the right enforcement of the policy (for instance for audit purposes).
2. Certify that, when transmitted in the network, the sensitive data are well using the configured trusted path.

This function is insured by a policy enforcement auditor PEA.

Note also that, in order to increase the confidence in the configuration of the trusted path, this policy enforcement auditor PEA can rely on some embedded hardware-based secure elements, as described in the patent application EP n°14306440.0 (Methods and Systems to Certify a Trusted Path in a SDN network).

**Figure 4** schematically represents the software means of the instance PAi of the MD-TPA that is executed within the intermediate network domain Di. The instance PAi is composed of the following modules:

- A trusted path manager TPM that receives and forwards requests PCReq and responses PCRep. When it receives request PCReq it forwards it downward to each of the downward neighboring domains Di+1, a; Di+1, b; Di+1, c; by using its MD-TPA address (e.g. a web service URL). The trusted path manager TPM comprises:

-- A trusted path request manager RQM for managing the requests PCReq.
-- A memory SRPM for storing all the sent and received requests PCReq and all the sent and received responses PCRep.
-- A trusted path response manager RPM for managing the responses PCRep.
-- An optimal trusted path computer and configurator OTPCC.
-- A memory FTPM for storing the found trusted paths.
-- A timer TIM that will be used for limiting the time spent for finding and selecting an optimal trusted path if several ones are available.

For instance, it is selected according to its cost.

- A memory DIM for storing domain information about the domain Di:

-- Domain identifier;
-- provider;

-- location/country;
-- address of the is instance of the MD-TPA, PAi (e. g. its universal resource locator);
-- etc;

- An interface AI for policy enforcement auditing, this interface linking the policy enforcement auditor PEA and the trusted path manager TPM.
- A memory NDIM for storing information about the neighboring domains (Di-1, Di+1, a; Di+1, b; Di+1, c; in this example). For a given neighboring domain it stores:

  -- The identity of the provider.
  -- The location/country.
  -- The address of its instance of the MD-TPA (e. g. its universal resource locator).

- A memory DTIM2 for storing neighboring domain trust information: reputation level, etc, provided by external sources of certified information on domain and nodes ESCI.
- A memory NTIM2 for storing node trust information: Vulnerability level, etc, provided by external sources of certified information on domain and nodes ESCI.
- An inter-domain trusted path computer TPC1.
- A neighboring domain trust level evaluator NDTLE.
- An intra-domain trusted path computer TPC2.
- A node trust level evaluator NTLE.

The neighboring domain trust level evaluator NDTLE collaborates with nodes N1, N2, N3 of the same domain Di, for retrieving local node information:

  -- Vendor;
  -- Type of node;
  -- Operating system version;
  -- Installed patches;
  -- etc.

a) In the instance PAi, **the trusted path request manager RQM** receives a request PCReq from the upward domain Di-1, and the corresponding domain information (e.g. the domain identifier of the domain Di-1). At first it tests whether the entry node (network node of the domain Di by which the path is entering the domain Di) is authorized by the policy:

  -- If the entry node is not authorised by the policy of this PCReq, the trusted path request manager RQM sends back a negative response PCRep to the instance PAi-1 of the MD-TPA in the upward neighboring domain Di-1.
  -- If the entry node is authorized by the policy of this PCReq, and if the destination node of the wanted trusted path is in the current domain Di (i.e. if the domain Di is the destination domain for the request PCReq), the instance APi computes an internal trusted path within the domain Di to reach this destination node. This is done by the intra-domain trusted path computer TPC2 (See below). If such an internal trusted path has been successfully computed, a positive response PCRep (with computed cost information) is sent back to the instance APi-1 of upward neighboring domain Di-1.
  -- If the entry node is authorized, and if the destination node is not in the current domain Di (i.e. the domain Di is a source or intermediary domain for this request PCReq), the request PCReq is processed by the inter-domain trusted path computer module TPC1 (See below). Note that if the domain Di is the source domain, the timer TIM is started for the first request PCReq "son" (see below) sent to a downward neighboring domain, Di+1, a or Di+1, b, or Di+1, c for instance. This timer TIM will later enable selecting the optimal trusted path if several ones are found (See below).

b) The **trusted path response manager RPM** receives incoming responses PCRep and the corresponding domain information, from the downward neighboring domain Di+1, a or Di+1, b or Di+1, c:

  -- If a received response PCRep is negative, the corresponding request PCReq is forwarded upwards to the instance APi-1 and is simply tagged as "closed".
  -- If the received response PCRep is positive, and if the current domain Di is an intermediary domain, the corresponding request PCReq is updated and then forwarded upward. It carries cost information (e.g. a number of crossed domains, and a number of crossed nodes). This cost information is incremented and then the updated response PCRep is sent back to the upward domain Di-1.
  Note: In other embodiments, the cost information is carried by the requests PCreq instead of the reponses PCrep
  -- If the received response PCRep is positive, and if the current domain Di is the source domain, the PCRep cost information is also incremented and this response PCRep is stored (in the found trusted path memory FTPM), waiting for the expiration of a timer TIM associated to the request PCReq corresponding to the response PCRep.

c) The **optimal trusted path computer and configurator OTPCC,** in the source domain of a given trusted path request PCReq, selects the optimal trusted path among all the found trusted paths (i.e. the received positive responses PCRep) when the timer TIM associated to this request PCReq expires.

Depending on the customer requirements, various methods (which can be a configuration parameter) can be considered for this selection. In particular, methods using a cost function depending on the number of crossed domains and on the number of crossed nodes can be applied. There may be constraints that are only preferences, i. e; that are not necessarily satisfied by all the segments constituting a trusted path. In this case, each positive response sent back to the source domain contains information about the preferences that are satisfied, in addition to the costs of the trusted path segments. This information is then used for selecting the best trusted path if there is a plurality of available trusted paths, in addition to the cost criterion. The optimal trusted path computer and configurator OTPCC launches then a trusted path configuration request TPConf that will follow the selected trusted path. Each time an instance PA of the MD-TPA receives this TPConf request, it will apply, within its domain, the appropriate node configurations (e.g. the configuration called "FlowMod" in the case of a SDN OpenFlow controlled network) to enforce the corresponding internal trusted path. This instance PA of the MD-TPA will then forward this TPConf request to the next neighboring domain downward to the destination domain.

Note that a TPConf OK message can optionally be sent back to the source domain (from the destination domain and through all the intermediary domains) to indicate that all the instances of MD-TPA, along the trusted path, have well configured the path. A negative TPConf NOK message is sent in case of any configuration error in one domain.

d) The **Inter-Domain Trusted Path Computer TPC1** receives each trust path request PCReq and evaluates which next downward neighboring domains are authorized by the policy, by using the neighboring domain trust level evaluator NDTLE (see below). For each of these authorized next neighboring domains, it then checks whether there is an intra-domain trusted path to connect an entry node (node by which the path is entering the domain) to an exit node (node by which the path is exiting the domain to reach the entry node of a further neighboring domain). For this purpose, it relies on the intra-domain trusted path computer TPC2 (see below). Through the trusted path request manager RQM, a request PCReq "son" is then forwarded to all to the downwards neighboring domains for which such an internal trusted path has been found. Note that there may be several exit nodes connected to a same downwards neighboring domain, and then different requests PCReq "sons" are sent.

e) The **neighboring domain trust level evaluator NDTLE** evaluates whether a downwards neighboring domain is authorized, or not, by the security/sovereignty policy of a given trust path request PCReq. Various parameters can be used for doing this evaluation. For instance, it can check whether the downwards neighboring domain is not in a list of unauthorized neighboring domains, included in the policy (e.g. a neighboring domain provider or a location not authorized by the policy). Neighboring domain information (e.g., provider, location, country) is stored in the neighboring domain information memory NDIM. The neighboring domain trust level evaluator NDTLE is also able to evaluate the reputation level of a neighboring domain by using neighboring domain trust information stored in the neighboring domain trust information memory NDTIM. All these trusted information related to the domains may come from external certified sources ESCI (e.g. dedicated web sites).

f) The **Intra-Domain Trusted Path Computer TPC2** computes a trusted path between two network nodes of a same domain (i.e., entry and exit nodes), or between an entry node and a machine located in the domain. For this purpose, at first it filters the domain topology of the nodes that are not authorized by the policy (using the Node Trust Level Evaluator NTLE described below). On this filtered domain topology, it applies then a graph path computation algorithm (e.g. a shortest path algorithm) between the two ends (nodes or machines) to find the trusted path. Once the trusted path is found (if any), it also computes some related metrics (e.g. the, number of hops, the estimated latency or bandwidth, ...).

g) The **Node Trust Level Evaluator NTLE** evaluates whether a network node (Nodes N1, N2, N3 on Figure 3) is authorized by the security/sovereignty policy of a given request PCReq. Various parameters can be used for doing this evaluation. For instance, it can check whether:

     -- the vendor,
     -- or the node type,
     -- or the operating systems, or the patch levels,
     of the nodes,
     are compliant with the policy.

It uses for this purpose the node information stored in the nodes N1, N2, N3, themselves but also node information stored in any other component of the considered instance PAi of the MD-TPA, or stored in any external public certified source (e.g. a web site).
It is also able to evaluate the vulnerability level and the reputation level of a network node by using node trust information (Vulnerability and reputation levels being given per node type). All the node trust information may come from external certified sources (e.g. a dedicated web site).

## Other possible embodiments of the method according to the invention

A typical embodiment of this method consists in implementing the MD-TPA as a new network application running upon an SDN controller (e.g., Floodlight, OpenDaylight, ONOS, RYU), as described above. But other embodiments are possible:

This embodiment can rely on the IETF Path Computation Element (PCE) architecture for inter-domain communication by integrating the PCReq/PCRep data within the PCReq/PCRep messages exchanged between the PCEs of two neighboring domains.

Preferably some critical information needed for the policy evaluation (e.g., domain information such as domain identifier, provider, location or country; node information such as vendor or OS) can be signed and stored in a secure environment (e.g., hardware secure element embedded in the SDN controller host). A trusted third party entity can also be in charge to certify this critical information. This will allow improving the trust of the customer regarding the obtained trusted path.

Note that this PCE embodiment can typically be applicable in the case of a very large provider who handles by himself an international network infrastructure and upon which he wants to enforce such security/sovereignty policies. For instance, this may correspond to an actor as Google regarding its B4 network which is a private SDN-based WAN connecting Google's data centers across the planet.

Another possible embodiment could be adapted to Border Gateway Protocol (BGP)-based networks (each domain being an Autonomous System). Indeed, the MD-TPA could be envisaged in a BGP architecture to support news security/sovereignty policies. Then the verification of the policy configuration can be made either by the policy enforcement auditor PEA or, if more confidence is requested, by relying on the system described in the European patent application n°14306440.0 Methods and Systems to Certify a Trusted Path in a SDN network).

## Claims

1. A method for computing and enforcing a trusted path between a first machine (VM1) in a source domain (DO1) and a second machine (VM2) in a destination domain (DO4) in a multi domain network, comprising the steps of:

   - a) in the source domain (DO1) sending a trusted path computation request to each of the trusted neighboring domains (DO2, DO3), this trusted path computation request comprising a policy defining what is a trusted domain and a trusted node;

   - b) in each trusted downwards neighboring domain (DO2), determining whether this latter is the destination domain or not, and

      -- if it is not the destination domain, seeking every next trusted downwards neighboring domain (DO3, DO4) and,

         --- if at least one next trusted downwards neighboring domain (DO4) is found, seeking at least one trusted path segment that can reach a found next trusted downwards neighboring domain (DO4), and, if a trusted path segment is found then forwarding the trusted path computation request to the found next trusted downwards neighboring domain (DO4);
         -- re-iterate all the step b for another found trusted downwards neighboring domain (DO3) until all the found next trusted downwards neighboring domain (DO3, DO4) has been processed;

      -- if it is the destination domain (DO4), seeking within this destination domain every trusted path segment that can reach the second machine (VM2), and, if there is at least one such segment, concluding that a trusted path exists between the first and the second machine (VM1, VM2);

   - c) when all the trusted downwards neighboring domains (DO2, DO3) have been processed, re-iterate step b for each next trusted downwards neighboring domain (DO4) until the destination domain (DO4) has been reached.

2. A method according to claim 1, further comprising the steps of sending a positive response (PCRep 1.1.1 OK, PCRep 1.1.2 OK) from the destination domain (Dd) to the source domain (Ds) if it has been concluded that a trusted path has been found between the first machine (VM1) and the second machine (VM2), for each internal trusted path that can reach the second machine (VM2).

3. A method according to claim 2, wherein each request and each response is sent through the data networks of the domains previously crossed by the corresponding request.

4. A method according to claim 2, wherein each request and each response is sent through a management network separate of the data networks of the domains previously crossed by the corresponding request.

5. A method according to claim 1 further comprising the steps of sending a negative response from a first domain (DO2) to the upwards neighboring domain (DO1) that sent a request, if there is no trusted path segment that can reach a next trusted downwards neighboring domain (DO3), within the first domain (DO1).

6. A method according to claim 1 further comprising the steps of sending a negative response from a given domain (DO4) to the source domain (DO1) that sent a request, if there is no trusted path segment that can reach a next trusted downwards neighboring domain or the second machine, within the given domain (DO4).

7. A method according to claim 1 further comprising, in the source domain (DO1), the steps of:

    - calculating a cost for each found trusted path, as a function of, at least, the number of traversed domains and the number of traversed nodes;
    - and then selecting a best trusted path according to the lowest cost if several ones are found, and actually configure it within the multi-domain network, .

8. A method according to claim 7 further comprising, in the source domain (DO1), the step of selecting a best trusted path according to a second criterion of preference, if several found paths have the same lowest cost, and actually configure it within the multi-domain network.

9. A method according to claim 7 further comprising, in the source domain (DO1), the step of selecting a best trusted path according to a second criterion of preference, if several found paths have the same lowest cost, and actually configure it within the multi-domain network.

10. A method according to claim 1 further comprising the steps of:

    - providing some certificates or strong/tamper-proof evidences of the right enforcement of the policy;
    - certifying that, when transmitted in the network, the sensitive data are well using a configured trusted path.

11. A method according to claim 1, implemented as a network application running upon a SDN controller.

12. An application server **characterized in that** it comprises means for implementing the method according to one of the claims 1 to 11.

13. A digital data storage medium storing a set of machine executable program instructions, which, when executed on a computer, because the computer to perform all the method steps of one of the methods according to claims 1 to 11.

14. A computer program product comprising computer-executable instructions for performing a method when the program is run on a computer, the method comprising the steps of one of the claims 1 to 11.

**Fig. 1**

**Fig. 2**

**Fig. 3**

**Fig. 4**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 816 774 A1 (ALCATEL LUCENT [FR]) 24 December 2014 (2014-12-24) * the whole document * | 1-14 | INV. H04L29/06 H04L12/715 |
| A | HYUNHUN CHO ET AL: "An Optimal Path Computation Architecture for the Cloud-Network on Software-Defined Networking", SUSTAINABILITY MDPI AG SWITZERLAND, vol. 7, no. 5, May 2015 (2015-05), pages 5413-5430, XP002759041, ISSN: 2071-1050, DOI: 10.3390/SU7055413 * section 2 * | 1-14 | |

TECHNICAL FIELDS
SEARCHED (IPC)

H04L

The present search report has been drawn up for all claims

| Place of search | Date of completion of the search | Examiner |
|---|---|---|
| Munich | 22 June 2016 | García Bolós, Ruth |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 7133

This annex lists the patent family members relating to the patent documents cited in the above-mentioned European search report.
The members are as contained in the European Patent Office EDP file on
The European Patent Office is in no way liable for these particulars which are merely given for the purpose of information.

22-06-2016

| Patent document cited in search report | Publication date | Patent family member(s) | Publication date |
|---|---|---|---|
| EP 2816774          A1 | 24-12-2014 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 14306440 A